# FASCICULE DE BREVET EUROPEEN

(11) **EP 3 233 460 B1**
(45) Date de publication et mention de la délivrance du brevet: **07.07.2021**
(21) Numéro de dépôt: 15817762.6
(22) Date de dépôt: 17.12.2015
(51) Int. Cl.: B31B 50/74, G01B 11/02, G01N 21/88, B07C 5/342, B31B 50/00, B31B 50/98, B31B 100/00, B31B 110/35, B31B 120/30

(54) **DISPOSITIF ET PROCÉDÉ DE CONTRÔLE DE LA QUALITÉ DE BOÎTES PLIABLES ET INSTALLATION DE FABRICATION COMPRENANT UN TEL DISPOSITIF DE CONTRÔLE**
VORRICHTUNG UND VERFAHREN ZUR QUALITÄTSÜBERPRÜFUNG VON FALTSCHACHTELN UND PRODUKTIONSANLAGE MIT SOLCH EINER QUALITÄTSKONTROLLVORRICHTUNG
DEVICE AND METHOD FOR CHECKING THE QUALITY OF FOLDING BOXES AND MANUFACTURING INSTALLATION COMPRISING SUCH A QUALITY-CONTROL DEVICE

(30) Priorité: 19.12.2014 FR 1462881
(43) Date de publication de la demande: 25.10.2017
(73) Titulaire: Bobst Lyon, 69100 Villeurbanne (FR)
(72) Inventeur: AMOROS, Robert, 38280 Villette d'Anthon (FR); ROSSET, Benoît, 01710 Thoiry (FR)
(74) Mandataire: Navarro, Asa Maria Thérèse
(86) Numéro de dépôt international: PCT/EP2015/025107
(87) Numéro de publication internationale: WO 2016/096157

(56) Documents cités:
- EP-A1- 0 937 573
- EP-A2- 0 892 264
- WO-A1-2013/118080
- DE-A1-102009 053 561
- DE-A1-102011 101 252
- JP-A- H0 922 464
- US-A- 5 212 656
- None

## Description

La présente invention concerne un dispositif et un procédé de contrôle pour contrôler la qualité de boîtes pliables. De plus, la présente invention concerne une installation de fabrication comprenant un tel dispositif de contrôle.

La présente invention s'applique aux domaines de la fabrication et du contrôle de boîtes pliables. Une boîte pliable peut par exemple être un carton d'emballage. En général, une boîte pliable à l'état plié comprend plusieurs panneaux reliés entre eux par des plis, ainsi que plusieurs rabats reliés aux panneaux. Deux rabats voisins sont séparés par une fente qui s'étend entre une région centrale et une face périphérique de la boîte pliable. La fente présente une extrémité périphérique qui débouche sur la face périphérique et qui délimite un intervalle latéral entre les deux rabats voisins.

Dans l'art antérieur, une installation de fabrication de boîtes pliables comprend un dispositif de collage, un dispositif de pliage des panneaux de chaque boîte pliable, un dispositif d'empilement pour empiler les boîtes pliables et un dispositif de transport pour déplacer chaque boîte pliable entre les dispositifs de collage, de pliage et d'empilement.

EP0937573A1 divulgue un dispositif de contrôle comprenant un système d'éclairage pour éclairer chaque boîte pliable et une caméra pour former des images de chaque boîte pliable, une par une, en cours de déplacement par un dispositif de transport à rouleaux. Un tel dispositif de contrôle a notamment pour fonction de déterminer si chaque boîte pliable est ou non conforme aux spécifications établies.

Cependant, le dispositif de contrôle de EP0937573A1 est situé à un emplacement où la boîte pliable n'a pas encore subi tous les traitements prévus. Ainsi, après que la caméra a formé une image des fentes séparant les rabats, chaque boîte pliable subit d'autres traitements qui peuvent modifier l'état de la boîte pliable. Il arrive donc que le dispositif de contrôle de EP0937573A1 juge une boîte pliable non conforme, alors que cette boîte pliable aurait pu devenir conforme après équerrage. Par conséquent, le dispositif de contrôle de EP0937573A1 présente un nombre relativement grand de boîtes pliables rebutées. Document WO 2013/118080 A1 divulgue un dispositif de contrôle qui utilise deux caméras convergentes pour acquérir deux images avant du paquet et les combiner pour obtenir une reconstruction stéréométrique, bien que pour cella un seul projecteur de lumière est mis en place.

La présente invention a notamment pour but de résoudre, en tout ou partie, les problèmes mentionnés ci-avant, en fournissant un dispositif de contrôle permettant de réduire les risques d'erreurs par le dispositif de contrôle, donc le nombre de boîtes pliables rebutées.

Dans ce but, l'invention a pour objet un dispositif de contrôle, pour contrôler la qualité de boîtes pliables, chaque boîte pliable comprenant, lorsque la boîte pliable est à l'état plié, au moins deux rabats séparés par une fente, la fente présentant une extrémité périphérique qui débouche sur une face périphérique de la boîte pliable et qui délimite un intervalle latéral entre les deux rabats, le dispositif de contrôle comprenant :
- un système d'éclairage destiné à éclairer les boîtes pliables à l'état plié, et
- au moins un appareil de prise d'images destiné à former des images des boîtes pliables à l'état plié,
le dispositif de contrôle étant caractérisé en ce que :
- le système d'éclairage est configuré pour éclairer un paquet formé de boîtes pliables superposées ou juxtaposées, ledit paquet présentant au moins une face périphérique de paquet définie par des faces périphériques de chaque boîte pliable composant le paquet,
- ledit au moins un appareil de prise d'images est configuré pour former au moins une image plurale représentant au moins une partie de la face périphérique de paquet lorsque le système d'éclairage éclaire la face périphérique de paquet,
et en ce qu'il comprend en outre au moins un système de traitement d'images configuré :
i) pour détecter chaque extrémité périphérique dans l'image plurale,
ii) pour générer un ensemble de données représentatives de la géométrie de chaque extrémité périphérique, et
iii) pour analyser l'ensemble de données de façon à déterminer la largeur de chaque intervalle latéral.

Ainsi, un tel dispositif de contrôle contrôle plusieurs boîtes pliables simultanément après qu'elles ont été disposées en paquets et équerrées, ce qui permet de réduire les risques d'erreurs. Ce contrôle par paquets permet en effet de diminuer le nombre de boîtes pliables rebutées, car l'équerrage d'un paquet redresse parfois certaines boîtes pliables, qui auraient été jugées défectueuses si elles avaient été contrôlées individuellement. Un tel dispositif de contrôle peut être agencé sur un côté d'un dispositif de transport des boîtes pliables appartenant à l'installation de fabrication des boîtes pliables, ce qui diminue l'encombrement de l'installation de fabrication.

Dans la présente demande, le terme « image plurale » désigne une image représentant les faces périphériques de plusieurs boîtes pliables, par exemple de plusieurs boîtes pliables accolées, c'est-à-dire superposées ou juxtaposées.

Dans la présente demande, le terme « paquet » désigne un groupe de plusieurs boîtes pliables accolées. Un paquet peut par exemple être une pile de boîtes pliables à l'état plié et superposées ou un groupe de boîtes pliables à l'état plié et juxtaposées. Dans le cas d'une pile, les boîtes pliables composant le paquet ne sont pas forcément liées ensemble. Dans le cas d'une pile, les boîtes pliables sont sensiblement horizontales. Dans le cas d'un groupe, les boîtes pliables sont préalablement empilées par le dispositif d'empilement, puis liées ensemble par un dispositif de liage, puis le paquet est pivoté, par exemple d'un quart-de-tour. Dans le cas d'un groupe, les boîtes pliables peuvent être sensiblement verticales.

Dans la présente demande, le terme « latéral » désigne un côté d'une boîte pliable ou d'un paquet de boîtes pliables. Typiquement, la tranche d'une boîte pliable forme une face latérale de cette boîte pliable.

Selon un mode de réalisation de l'invention, le système de traitement d'images est en outre configuré :
xii) pour extraire des objets sombres à partir de chaque image plurale,
vii) pour comparer la hauteur de chaque objet sombre à l'épaisseur nominale d'une boîte pliable à l'état plié, la hauteur étant mesurée perpendiculairement à la plus grande dimension de la boîte pliable à l'état plié, et
viii) pour sélectionner chaque objet sombre ayant une hauteur équivalente à l'épaisseur nominale d'une boîte pliable à l'état plié sous une tolérance prédéterminée, chaque objet sombre sélectionné correspondant à un intervalle latéral.

Ainsi, un tel système de traitement d'images trouve automatiquement les emplacements des extrémités périphériques des fentes. Sur chaque objet sombre sélectionné, le système de traitement d'images peut déterminer la largeur de l'intervalle latéral formé à l'extrémité périphérique de chaque fente.

Selon une variante de l'invention, le système de traitement d'images est en outre configuré :
a) pour détecter les limites de la face périphérique perpendiculairement à la plus grande dimension de la boîte pliable à l'état plié,
b) pour mesurer un niveau de luminosité de référence entre une desdites limites et un bord de l'image de la face périphérique, et
c) pour générer une image binaire en utilisant ce niveau de luminosité de référence pour opérer un seuillage de l'image de la face périphérique.

Selon une variante de l'invention, le système de traitement d'images comprend une mémoire configurée pour enregistrer des paramètres géométriques des boîtes pliables, en particulier l'épaisseur nominale des boîtes pliables.

Un objet sombre est un objet qui a peu ou pas réfléchi l'éclairage émis par le système d'éclairage. Un objet sombre peut ainsi apparaître sensiblement noir sur l'image de la face périphérique. En d'autres termes, les pixels formant un objet sombre ont un niveau de luminosité, par exemple un niveau de gris, faible ou nul. Donc un objet sombre correspond à une région vide ou peu dense de la boîte pliable, par exemple l'extrémité périphérique d'une fente ou une ondulation lorsque la boîte pliable comprend une feuille ondulée.

Selon une variante de l'invention, la tolérance prédéterminée est sélectionnée entre 3% et 50% de l'épaisseur nominale d'une boîte pliable à l'état plié.

Selon un mode de réalisation de l'invention, le système de traitement d'images est en outre configuré :
xiii) pour détecter, dans chaque image plurale, les limites des boîtes pliables formant les extrémités du paquet perpendiculairement à la plus grande dimension d'une boîte pliable à l'état plié, et
xiv) pour discriminer chaque boîte pliable dans le paquet.

Ainsi, un tel système de traitement d'images permet, en une seule phase de traitement d'images, de déterminer les intervalles latéraux des fentes de toutes les boîtes pliables apparaissant sur une image plurale.

Selon une variante de l'invention, le système de traitement d'images opère la discrimination de chaque boîte pliable en traitant l'image binaire générée comme précisé ci-avant. Le système de traitement d'images peut ensuite comparer la hauteur de chaque objet sombre à l'épaisseur nominale d'une boîte pliable à l'état plié, puis sélectionner chaque objet sombre ayant une hauteur équivalente à l'épaisseur nominale d'une boîte pliable à l'état plié sous une tolérance prédéterminée. Le système de traitement d'images génère alors l'ensemble de données représentatives de la géométrie des extrémités périphériques, de façon à déterminer la largeur de chaque intervalle latéral, pour toutes les boîtes pliables apparaissant sur l'image plurale.

Selon un mode de réalisation de l'invention, le système de traitement d'images est en outre configuré :
iv) pour comparer la largeur de chaque intervalle latéral à une limite inférieure prédéterminée et à une limite supérieure prédéterminée, et
v) pour générer un signal d'anomalie lorsqu'une largeur d'un intervalle latéral est soit inférieure à la limite inférieure prédéterminée soit supérieure à la limite supérieure prédéterminée.

Ainsi, un tel système de traitement d'images permet de signaler toute boîte pliable défectueuse, c'est-à-dire présentant un intervalle latéral trop grand ou trop petit en raison d'une découpe, d'un pliage et/ou d'un collage défaillant(e).

Selon une variante de l'invention, le signal d'anomalie est associé à une information d'identification de la boîte pliable défectueuse. Ainsi, un opérateur pourra rapidement prélever et rebuter la boîte pliable défectueuse.

Selon un mode de réalisation de l'invention, ledit au moins un appareil de prise d'images est une caméra matricielle. Selon une variante de l'invention, la caméra matricielle est polychrome. Alternativement, la caméra matricielle est monochrome.

La ou chaque caméra peut être agencée mobile de façon à descendre vers le dispositif de transport qui déplace les paquets, par exemple un convoyeur, de sorte que la ou chaque caméra contrôle chaque paquet. Puis, la ou chaque caméra remonte entre deux paquets, de façon à dégager le chemin pour les paquets suivants.

Selon un mode de réalisation de l'invention, ledit au moins un appareil de prise d'images est une caméra linéaire configurée pour former une image d'une face périphérique respective de chaque boîte pliable pendant qu'un dispositif de transport déplace chaque boîte pliable par rapport à la caméra linéaire.

Ainsi, une telle caméra linéaire permet de former des images de faces périphériques pendant que le dispositif de transport déplace les boîtes pliables. Comme le déplacement des boîtes pliables n'est pas interrompu, la cadence de fabrication des boîtes pliables peut être élevée. La caméra linéaire sera avantageusement synchronisée avec la vitesse de déplacement des boîtes pliables par un dispositif de transport de l'installation de fabrication.

Selon un mode de réalisation de l'invention, le dispositif de contrôle comprend au moins deux appareils de prise d'images placés à deux altitudes différentes de façon à former des images plurales respectivement d'une partie basse et d'une partie haute de la face périphérique de paquet.

L'altitude nulle peut être prise près des appareils de prise d'images et sur une surface du dispositif de transport qui est destinée à recevoir une boîte pliable.

Ainsi, les deux appareils de prise d'images permettent de former des images plurales de grande résolution malgré des paquets contenant un grand nombre de boîtes pliables.

Selon une variante de l'invention, les deux appareils de prise d'images sont configurés pour produire une zone de recoupement entre une image plurale de la partie basse du paquet et une image plurale de la partie haute du paquet. Ainsi, une telle zone de recoupement garantit qu'aucune boîte pliable du paquet ne peut échapper au dispositif de contrôle ni être comptée en double.

Alternativement à une caméra, l'appareil de prise d'images peut être un appareil photographique. Ainsi, un tel appareil photographique peut former des images photographiques lorsqu'un dispositif de transport des paquets de boîtes pliables s'arrête ou ralentit. Pour mettre en œuvre cette alternative, le dispositif de transport doit être commandé pour marquer régulièrement des arrêts, par exemple à chaque passage d'un paquet de boîtes pliables.

Selon un mode de réalisation de l'invention, le système d'éclairage comprend au moins une source d'éclairage sélectionnée dans le groupe constitué d'un tube fluorescent, d'une lampe à décharge et de diodes électroluminescentes, par exemple une colonne de diodes électroluminescentes.

Ainsi, une telle source d'éclairage permet d'éclairer efficacement les boîtes pliables de façon à former des images de faces périphériques contrastées. Comme une telle source d'éclairage peut émettre une grande quantité de lumière, les images plurales sont contrastées, ce qui permet d'y détecter précisément les extrémités périphériques.

Selon un mode de réalisation de l'invention, le système d'éclairage est configuré pour éclairer de manière pulsée une face périphérique de chaque boîte pliable à l'état plié.

Ainsi, un tel système d'éclairage pulsé permet d'éclairer les boîtes pliables avec une grande quantité de lumière, de façon à former des images de faces périphériques contrastées. Comme une telle source d'éclairage peut émettre une grande quantité de lumière, les images plurales sont contrastées, ce qui permet d'y détecter précisément les extrémités périphériques.

Selon une variante de l'invention, la durée d'une impulsion d'éclairage est comprise entre 0,01 ms et 100 ms, par exemple égale à 1 ms.

Selon l'invention, le système d'éclairage comprend deux sources d'éclairage agencées de part et d'autre dudit au moins un appareil de prise d'images, les sources d'éclairage étant configurées pour éclairer successivement une même face périphérique de chaque boîte pliable à l'état plié de sorte que ledit au moins un appareil de prise d'images forme successivement deux images différentes de la même face périphérique de chaque boîte pliable à l'état plié.

En d'autres termes, le système d'éclairage produit un éclairage alterné à gauche et à droite de l'appareil de prise d'images, lequel forme deux images présentant des contrastes différents en fonction de l'emplacement dans l'image. Ainsi, ces deux images permettent d'identifier avec précision les bords des fentes en « V ». En effet, la première image (vue de gauche) aura un grand contraste pour la limite gauche de l'extrémité périphérique de la fente, alors que la deuxième image (vue de droite) aura un grand contraste pour la limite droite de l'extrémité périphérique de la fente.

Par ailleurs, la présente invention a pour objet une installation de fabrication, pour fabriquer des boîtes pliables, chaque boîte pliable comprenant, lorsque la boîte pliable est à l'état plié, des panneaux raccordés par des plis et au moins deux rabats séparés par une fente, l'installation de fabrication comprenant au moins :
- un dispositif de collage configuré pour appliquer de la colle sur une zone de collage de chaque boîte pliable,
- un dispositif de pliage configuré pour replier des panneaux de façon à coller une zone à coller sur la zone de collage,
- un dispositif d'empilement configuré pour empiler les boîtes pliables à l'état plié,
- un dispositif de transport, configuré pour placer chaque boîte pliable dans le dispositif de collage, puis dans le dispositif de pliage, puis dans le dispositif d'empilement, et
- au moins un dispositif de contrôle selon l'invention, ledit au moins un dispositif de contrôle est disposé en aval du dispositif d'empilement.

Ainsi, une telle installation de fabrication permet de fabriquer des boîtes pliables avec une grande cadence de fabrication un taux de rebut très faible, notamment car chaque appareil de prise d'images forme des images bien contrastées, ce qui réduit les risques d'erreurs par le dispositif de contrôle, donc le nombre de boîtes pliables rebutées. Chaque dispositif de contrôle peut contrôler, en une seule phase, toutes les boîtes pliables apparaissant sur une image plurale.

En d'autres termes, le dispositif de collage, le dispositif de pliage, puis le dispositif d'empilement se succèdent d'amont en aval dans le sens de circulation imposé par le dispositif de transport. Dans ce mode de réalisation, le dispositif de contrôle contrôle les boîtes pliables par paquets.

Selon une variante de l'invention, le dispositif de transport est un convoyeur, par exemple un convoyeur à courroies. Selon une variante de l'invention, le dispositif de transport est réglé de sorte que la cadence de l'installation est comprise entre 1000 et 2500 boîtes pliables par heure, par exemple égale à 1800 boîtes pliables par heure.

Selon un mode de réalisation de l'invention, l'installation de fabrication du mode de réalisation précédent comprend deux dispositifs de contrôle, les dispositifs de contrôle étant disposés de façon à former des images respectives de deux faces périphériques de paquet.

Dans un tel agencement, les deux appareils de prise d'images sont séparés d'une distance prédéterminée en fonction notamment de la largeur des paquets. Ainsi, un tel agencement des deux dispositifs de contrôles permet de contrôler simultanément les fentes situées sur chaque face périphérique de paquet.

Selon une alternative au mode de réalisation précédent, l'installation de fabrication comprend un unique dispositif de contrôle et un mécanisme rotatif configuré pour faire pivoter chaque paquet de boîtes pliables d'un demi-tour. Ainsi, le dispositif de contrôle peut contrôler successivement les faces opposées de chaque paquet de boîtes pliables. Avec un unique dispositif de contrôle, l'encombrement de l'installation de fabrication est réduit.

Selon une variante de l'invention, le dispositif de contrôle peut être placé en ligne, c'est-à-dire que les contrôles sont effectués lorsque le dispositif de transport amène les boîtes pliables devant le dispositif de contrôle. Alternativement, le dispositif de contrôle peut être placé hors ligne, c'est-à-dire que les boîtes pliables sont contrôlées après avoir été ôtées du dispositif de transport.

Selon une variante de l'invention, le dispositif de transport est agencé pour transporter les paquets de boîtes pliables suivant une direction horizontale, et le dispositif de contrôle est agencé de sorte que l'orientation de la source de lumière dudit au moins un système d'éclairage forme un angle compris entre 0 degrés et 70 degrés avec la direction horizontale.

Selon une variante de l'invention, l'installation de fabrication peut comprendre un mécanisme d'éjection configuré pour éjecter des paquets individuellement, le mécanisme d'éjection étant connecté au dispositif de contrôle, en particulier au système de traitement d'images, de sorte que, lorsque le dispositif de contrôle émet un signal de défaut indiquant qu'un paquet contient au moins une boîte pliable défectueuse, le mécanisme d'éjection éjecte le paquet qui contient au moins une boîte pliable défectueuse.

De plus, la présente invention a pour objet un procédé de contrôle, pour contrôler la qualité de boîtes pliables, chaque boîte pliable comprenant, lorsque la boîte pliable est à l'état plié, au moins deux rabats séparés par une fente, la fente présentant une extrémité périphérique qui débouche sur une face périphérique de la boîte pliable et qui délimite un intervalle latéral entre les deux rabats, le procédé de contrôle comprenant les étapes :
- éclairer, par un système d'éclairage, un paquet formé de boîtes pliables à l'état plié, et superposées ou juxtaposées, ledit paquet présentant au moins une face périphérique de paquet définie par des faces périphériques de chaque boîte pliable composant le paquet, et
- former, par au moins un appareil de prise d'images, des images des boîtes pliables à l'état plié,
le procédé de contrôle étant caractérisé en ce qu'il comprend en outre les étapes :
- éclairer, par le système d'éclairage comprenant deux sources d'éclairage agencées de part et d'autre dudit au moins un appareil de prise d'images, les sources d'éclairage étant configurées pour éclairer successivement une même face périphérique de chaque boîte pliable à l'état plié de sorte que ledit au moins un appareil de prise d'images forme successivement deux images différentes de la même face périphérique de chaque boîte pliable à l'état plié,
- former, par ledit au moins un appareil de prise d'images, au moins une image plurale représentant au moins une partie de la face périphérique de paquet lorsque le système d'éclairage éclaire la face périphérique de paquet,
- actionner au moins un système de traitement d'images de façon à :
   i) détecter au moins une extrémité périphérique dans l'image plurale,
   ii) générer un ensemble de données représentatives de la géométrie de chaque extrémité périphérique, et
   iii) analyser l'ensemble de données de façon à déterminer la largeur de chaque intervalle latéral.

Les modes de réalisation et les variantes mentionnés ci-avant peuvent être pris isolément ou selon toute combinaison techniquement admissible.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue schématique illustrant une boîte pliable défectueuse ;
- la figure 2 est une vue schématique d'une installation de fabrication conforme à l'invention ;
- la figure 3 est une vue schématique de dessus d'une partie de l'installation de fabrication de la figure 2, comprenant un dispositif de contrôle conforme à un premier mode de réalisation de l'invention ;
- la figure 4 est une coupe schématique, par un plan horizontal lorsque le dispositif de contrôle de la figure 3 est en position de service ;
- la figure 5 est une vue schématique en perspective du dispositif de contrôle de la figure 4 ;
- la figure 6 est une coupe schématique, par un plan vertical lorsque le dispositif de contrôle est en position de service, du dispositif de contrôle de la figure 4 ;
- la figure 7 est un schéma illustrant un premier type de fente à contrôler ;
- la figure 8 est une image plurale d'un paquet de boîtes pliables présentant des fentes de ce premier type, l'image plurale ayant été formée par un appareil de prises d'image appartenant au dispositif de contrôle de la figure 3 ;
- la figure 9 est une vue schématique du dispositif de contrôle de la figure 3, au cours d'une étape d'un procédé de contrôle conforme à l'invention, dans laquelle deux sources d'éclairage éclairent simultanément un paquet de boîtes pliables présentant un deuxième type de fente à contrôler ;
- la figure 10 est une image plurale résultant de l'étape illustrée à la figure 9 ;
- les figures 11 et 12 sont des vues schématiques du dispositif de contrôle de la figure 3, au cours d'une étape d'un procédé de contrôle conforme à l'invention, dans laquelle deux sources d'éclairage éclairent successivement un paquet de boîtes pliables ;
- les figures 13 et 14 sont des images résultant respectivement des étapes illustrées aux figures 12 et 13 ;
- la figure 15 est un organigramme illustrant un procédé de contrôle conforme à l'invention ;
- la figure 16 est une image d'un paquet de boîtes pliables présentant des fentes du premier type, l'image résultant d'une étape du procédé de contrôle illustré à la figure 15 ;
- la figure 17 est une image binaire issue de l'image de la figure 16 ;
- la figure 18 est une vue à plus grande échelle du détail XVIII à la figure 17, illustrant une étape du procédé de contrôle illustré à la figure 15 ;
- la figure 19 est une vue à plus grande échelle du détail XIX à la figure 17, illustrant une étape du procédé de contrôle illustré à la figure 15 ;
- la figure 20 est une vue schématique en perspective illustrant une partie d'un dispositif de contrôle conforme à un deuxième mode de réalisation de l'invention et comprenant une caméra linéaire ; et
- la figure 21 est une coupe suivant le plan XXI à la figure 20.

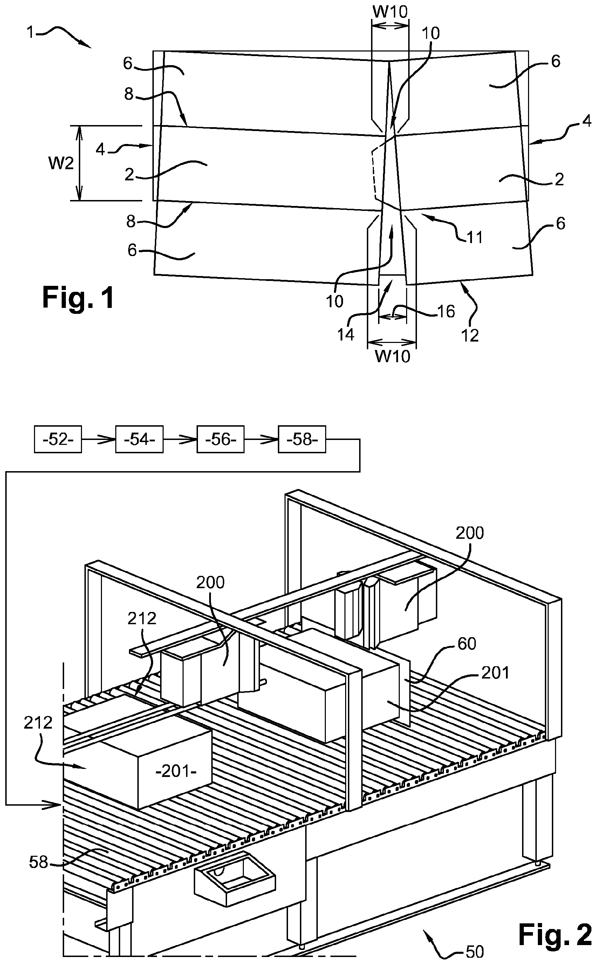

La figure 1 illustre une boîte pliable 1 à l'état plié et comprenant i) des panneaux 2, qui sont reliés par des plis 4, ainsi que ii) des rabats 6. Chaque panneau 2 a une largeur W2, mesurée perpendiculairement aux plis 4, qui correspond à la hauteur de la boîte pliable 1 à l'état déplié. Chaque rabat 6 est relié à un panneau respectif 2 par un pli 8 formé par une onduleuse.

Deux rabats voisins 6 sont séparés par une fente respective 10. Chaque fente 10 s'étend entre une région centrale 11 et une face périphérique 12 de la boîte pliable 1. La fente 10 présente une extrémité périphérique 14 qui débouche sur la face périphérique 12 et qui délimite un intervalle latéral 16 entre les deux rabats voisins 6. La fente 10 présente une extrémité centrale située dans la région centrale 11, donc à l'opposé de l'extrémité périphérique 14.

Comme le montre la figure 1, la boîte pliable 1 présente un défaut, car les fentes 10 ont des bords obliques, et pas parallèles entre eux. L'une des fentes 10 a une extrémité périphérique 14 trop large, donc un intervalle latéral 16 trop grand, tandis que l'autre fente 10 a une extrémité périphérique 14 trop étroite, donc un intervalle latéral 16 trop petit. Ce défaut peut résulter d'une mauvaise découpe, d'un mauvais collage et/ou d'un mauvais pliage. Parfois, une largeur W10 d'une fente 10 est déterminée près des plis 8, par une mesure dans un dispositif de l'état de la technique ou par extrapolation dans le cas de la présente invention.

La figure 2 illustre une installation de fabrication 50, qui est destinée à fabriquer des boîtes pliables 1 et qui comprend au moins :
- un dispositif de collage 52 configuré pour appliquer de la colle sur une zone de collage de chaque boîte pliable 1,
- un dispositif de pliage 54 configuré pour replier des panneaux 4 de façon à coller une zone à coller sur la zone de collage,
- un dispositif d'empilement 56 configuré pour empiler les boîtes pliables 1 à l'état plié,
- un dispositif d'équerrage 60 configuré pour équerrer les boîtes pliables 1, de façon à former des paquets 201,
- un dispositif de transport 58, configuré pour placer les boîtes pliables 1 dans le dispositif de collage 52, puis dans le dispositif de pliage 54, puis dans le dispositif d'empilement 56 ; le dispositif de transport 58 est ici un convoyeur à courroies assurant une cadence de l'installation environ égale à 1800 boîtes pliables 1 par heure, et
- deux dispositifs de contrôle 200 conformes à l'invention.

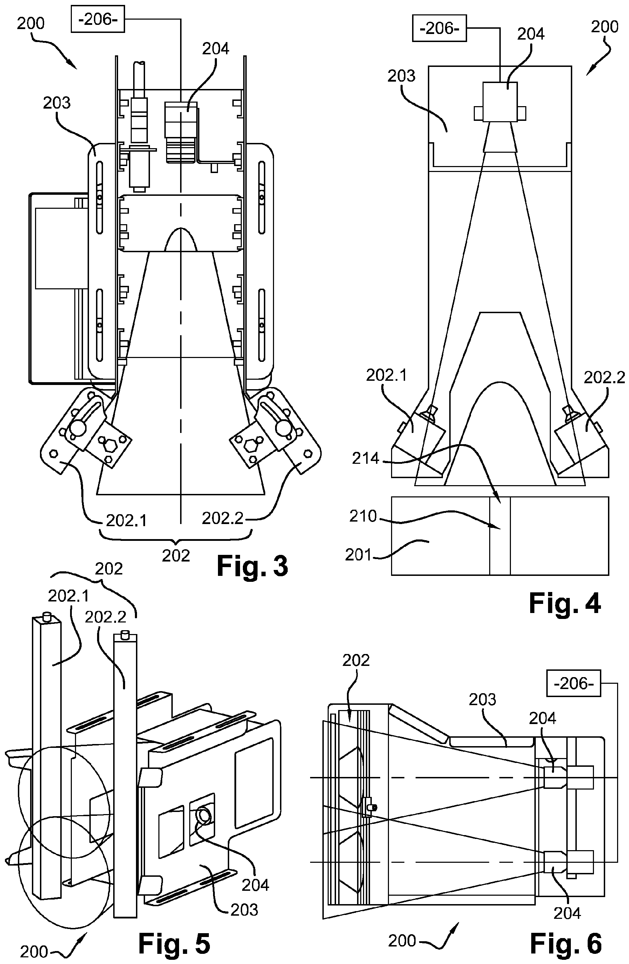

Dans l'exemple des figures 2 et 3, les dispositifs de contrôle 200 sont disposés en aval du dispositif d'empilement 56 et du dispositif d'équerrage 60. Le dispositif de collage 52, le dispositif de pliage 54, le dispositif d'empilement 56 et le dispositif d'équerrage 60 se succèdent d'amont en aval dans le sens de circulation imposé par le dispositif de transport 58. Chaque dispositif de contrôle 200 contrôle donc les boîtes pliables 1 par paquets 201.

Par ailleurs, les deux dispositifs de contrôle 200 sont disposés de façon à former des images respectives de deux faces périphériques de paquet 212. Une telle disposition permet de contrôler toutes les fentes de chaque boîte pliable 1 contenues dans un paquet 201.

Les figures 3, 4, 5 et 6 illustrent l'un des dispositifs de contrôle 200. Le dispositif de contrôle 200 comprend un système d'éclairage 202 avec deux sources d'éclairage 202.1 et 202.2, deux caméras 204 formant un appareil de prise d'images et un système de traitement d'images 206. Le système d'éclairage 202 et les caméras 204 sont montés sur un bâti 203.

Le dispositif de contrôle 200 est ici placé en ligne, c'est-à-dire que les contrôles sont effectués lorsque le dispositif de transport 58 amène les paquets 201 devant le dispositif de contrôle 200. Le dispositif de transport 58 est agencé pour transporter les paquets 201 suivant une direction horizontale.

Le système d'éclairage 202 est configuré pour éclairer un paquet 201 formé de boîtes pliables superposées, alors que le système d'éclairage 202 est configuré pour éclairer les boîtes pliables 1 une par une. Le paquet 201 présente deux faces périphériques de paquet 212 qui sont définies par des faces périphériques de chaque boîte pliable composant le paquet 201. Donc l'angle solide éclairé par le système d'éclairage 202 est plus grand que l'angle solide éclairé par le système d'éclairage 202.

Comme le montre la figure 6, le dispositif de contrôle 200 comprend deux caméras 204. Les caméras 204 sont placées à deux altitudes différentes de façon à former des images plurales 205 respectivement d'une partie basse et d'une partie haute de la face périphérique de paquet 212.

Ainsi, les deux caméras 204 permettent de former des images plurales 205 de grande résolution malgré des paquets 201 contenant un grand nombre de boîtes pliables 1. Les deux caméras 204 sont ici configurées pour produire une zone de recoupement entre une image plurale de la partie basse du paquet 201 et une image plurale de la partie haute du paquet 201. Le dispositif de contrôle 200 est agencé de sorte que l'axe optique de chaque caméra 204 forme un angle non représenté et environ égal à 60 degrés avec la direction horizontale.

Chaque caméra 204 est une caméra matricielle, alors que la caméra 204 est une caméra linéaire.

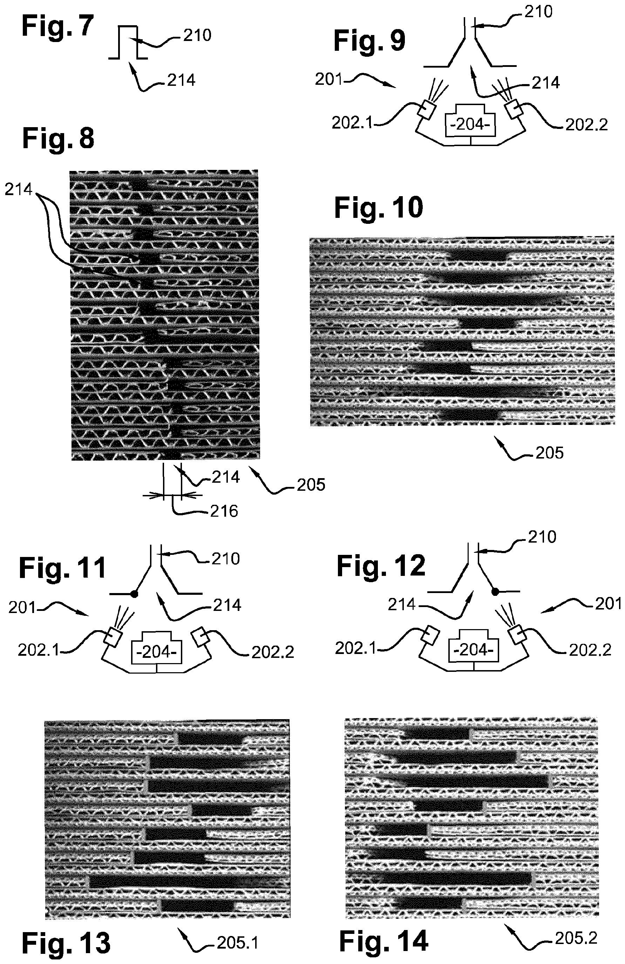

Chaque caméra 204 est configurée pour former au moins une image plurale 205 de la face périphérique de paquet 212 lorsque le système d'éclairage 202 éclaire la face périphérique de paquet 212. Chaque image plurale 205 représente au moins une partie de la face périphérique de paquet 212 lorsque le système d'éclairage 202 éclaire la face périphérique de paquet 212. Les figures 8, 10, 13, 14 et 16 illustrent des images plurales 205 et équivalentes. Donc le champ d'observation de chaque caméra 204 est plus grand que le champ d'observation de la caméra 204.

Le système de traitement d'images 206 est configuré :
i) pour détecter chaque extrémité périphérique 214 (figures 4 et 8) dans l'image plurale, c'est-à-dire de toutes les extrémités périphériques 214 des fentes définies par les boîtes pliables composant le paquet 201,
ii) pour générer un ensemble de données représentatives de la géométrie de chaque extrémité périphérique 214,
iii) pour analyser l'ensemble de données de façon à déterminer la largeur de chaque intervalle latéral 216 (figures 4 et 8).

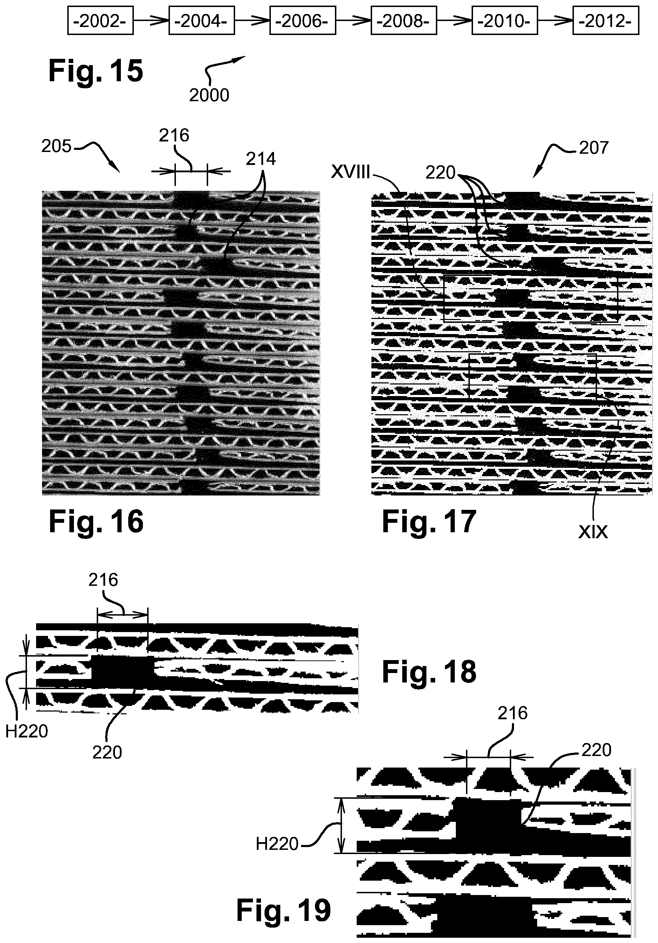

Dans l'exemple des figures 2 à 6, le système de traitement d'images 206 est en outre configuré :
a) pour détecter les limites de la face périphérique 212 perpendiculairement à la plus grande dimension de la face périphérique de paquet 212,
b) pour mesurer un niveau de luminosité de référence entre une de ces limites de la face périphérique de paquet 212 et un bord de l'image plurale 205, et
c) pour générer une image plurale binaire 207 (figures 17 à 19) en utilisant ce niveau de luminosité de référence pour opérer un seuillage de l'image plurale 205.

À partir d'une image plurale binaire 207, le système de traitement d'images 206 peut ensuite :
vii) comparer la hauteur H220 de chaque objet sombre 220 à l'épaisseur nominale d'une boîte pliable 1 à l'état plié,
viii) sélectionner chaque objet sombre 220 ayant une hauteur H220 équivalente à l'épaisseur nominale d'une boîte pliable à l'état plié sous une tolérance prédéterminée.
xii) extraire des objets sombres 220 à partir de chaque image plurale binaire 207,
xiii) détecter, dans chaque image plurale binaire 207, les limites des boîtes pliables formant les extrémités du paquet 201 perpendiculairement à la plus grande dimension d'une boîte pliable 1 à l'état plié, et
xiv) pour discriminer chaque boîte pliable dans le paquet 201 ; le système de traitement d'images 206 opère la discrimination de chaque boîte pliable en traitant une image plurale binaire 207 (figures 17 à 19).

Le système de traitement d'images 206 génère alors l'ensemble de données représentatives de la géométrie des extrémités périphériques 214 des fentes 210, de façon à déterminer la largeur de chaque intervalle latéral 216, pour toutes les boîtes pliables apparaissant sur l'image plurale binaire 207, donc sur l'image plurale 205.

En traitant une seule image plurale 205, le système de traitement d'images 206 peut ainsi déterminer les intervalles latéraux 216 des fentes 210 de toutes les boîtes pliables composant un paquet 201.

En pratique, l'image issue d'une caméra 204 est plus grande que l'image plurale 205. L'image plurale 205 est la portion utile de l'image issue d'une caméra 204, c'est-à-dire la portion où peuvent être détectées les extrémités latérales. En d'autres termes, les autres portions de l'image issue d'une caméra 204 ne montrent aucune extrémité latérale. La portion utile peut être sélectionnée automatiquement en fonction des dimensions de chaque boîte pliable 1, avec une marge destinée à compenser un alignement imparfait des boîtes pliables dans le paquet 201. Réduire l'image issue d'une caméra 204 à la portion utile que forme une image plurale 205 permet de minimiser la durée du traitement d'images.

Les figures 7 et 9 illustrent schématiquement en coupe la géométrie de deux types de fentes. La figure 7 illustre un premier type de fente dit « droit », car les bords de la fente sont parallèles entre eux. La figure 9 illustre un deuxième type de fente dit en « V », car les bords divergent obliquement vers l'extrémité périphérique.

Les figures 8 et 10 illustrent les images plurales 205 obtenues respectivement pour le premier type de fente (figure 7) et pour le deuxième type de fente (figure 9), lorsque les sources d'éclairage 202.1 et 202.2 éclairent simultanément la face périphérique de paquet 212.

L'image plurale 205 de la figure 8 présente des extrémités périphériques dont les bords sont très contrastés. Donc le système de traitement d'images 206 peut facilement traiter l'image plurale 205 de la figure 8 pour y détecter les extrémités périphériques des fentes et déterminer la largeur de chaque intervalle latéral.

Au contraire, l'image plurale 205 de la figure 10 présente des extrémités périphériques dont les bords sont peu contrastés, car la fente est de type en « V ». Donc le système de traitement d'images 206 traite plus difficilement l'image plurale 205 de la figure 10 que l'image plurale de la figure 8.

Les deux sources d'éclairage 202.1 et 202.2 sont agencées de part et d'autre des caméras 204. Comme le montrent les figures 11 et 13, les sources d'éclairage 202.1 et 202.2 sont configurées pour éclairer successivement une même face périphérique de paquet 212. Ainsi, chaque caméra 204 forme successivement, pour une même face périphérique de paquet 212, deux images plurales 205.1 et 205.2 différentes visibles aux figures 12 et 14.

L'image plurale 205.1 est formée lors de l'éclairage par la source d'éclairage 202.1 et l'image plurale 205.2 est formée lors de l'éclairage par la source d'éclairage 202.2. Sur l'image plurale 205.1, la limite gauche de chaque extrémité périphérique 214 est très contrastée et sur l'image plurale 205.2, la limite droite de chaque extrémité périphérique 214 est très contrastée. Le système d'éclairage 202 est configuré pour éclairer de manière pulsée la face périphérique de paquet 212. La durée d'une impulsion d'éclairage est ici environ égale à 20 ms. Entre les deux impulsions, le paquet 201 reste immobile, afin d'avoir coïncidence des deux images successivement formées.

Le système de traitement d'images 206 traite ensuite les images plurales 205.1 et 205.2 pour :
i) détecter les limites gauche et droite de chaque extrémité périphérique 214,
ii) générer un ensemble de données représentatives de la géométrie de chaque extrémité périphérique 214,
iii) analyser cet ensemble de données de façon à déterminer la largeur de chaque intervalle latéral 216.

Une telle configuration des sources d'éclairage 202.1 et 202.2 permet au système d'éclairage 202 de produire un éclairage alterné, ce qui améliore la détection de toutes les extrémités périphériques 214 des fentes en « V ».

En service, le dispositif de contrôle 200 est commandé suivant un procédé de contrôle 2000 conforme à l'invention et illustré à la figure 15. Le procédé de contrôle 2000 comprend les étapes :
2002. éclairer, par le système d'éclairage 202, une face périphérique de paquet 212,
2004. former, par chaque caméra 204, des images plurales 205 de la face périphérique de paquet 212 lorsque le système d'éclairage 202 éclaire la face périphérique de paquet 212,
2006. actionner le système de traitement d'images 206 de façon à :
   2008. i) détecter chaque extrémité périphérique 214 dans chaque image plurale 205 de la face périphérique de paquet 212,
   2010. ii) générer un ensemble de données représentatives de la géométrie de chaque extrémité périphérique 214, et
   2012. iii) analyser l'ensemble de données de façon à déterminer la largeur de chaque intervalle latéral 216.

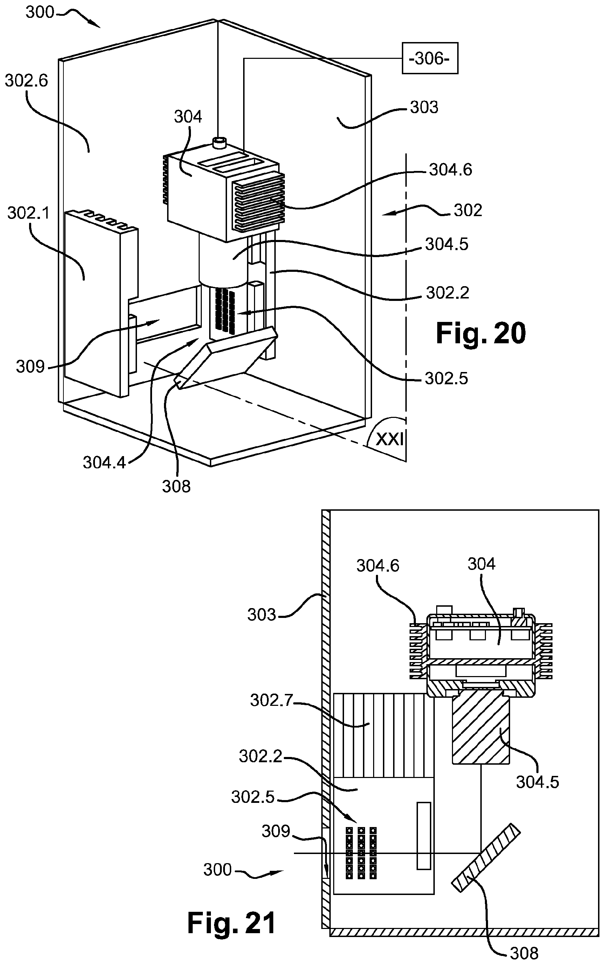

Les figures 20 et 21 illustrent une partie d'un dispositif de contrôle 300 conforme à un deuxième mode de réalisation de l'invention. Dans la mesure où le dispositif de contrôle 300 est similaire au dispositif de contrôle 200, la description du dispositif de contrôle 200 donnée ci-avant en relation avec les figures 1 à 19 peut être transposée au dispositif de contrôle 300, à l'exception des différences notables énoncées ci-après.

Un élément du dispositif de contrôle 300 identique ou similaire, par sa structure et/ou sa fonction, à un élément du dispositif de contrôle 200 porte la même référence augmentée de 100. On définit ainsi un système d'éclairage 302 avec deux sources d'éclairage 302.1 et 302.2, un bâti 303, une caméra 304 et un système de traitement d'images 306.

Le dispositif de contrôle 300 diffère du dispositif de contrôle 200, notamment car la caméra 304 est une caméra linéaire, alors que le dispositif de contrôle 200 comprend deux caméras 204 de type matricielle. Une caméra linéaire est une caméra dont la partie photosensible est composée d'une ligne de capteurs (dimension 1xn). Les capteurs peuvent être du type CCD (de l'anglais « Charge-Coupled Device » qui signifie « dispositif à transfert de charge ») ou du type CMOS (de l'anglais « Complementarity metal-oxide-semiconductor » qui signifie « semi-conducteur à oxyde métallique complémentaire »). La caméra 304 est configurée pour recevoir un faisceau optique 304.4.

De plus, le dispositif de contrôle 300 diffère du dispositif de contrôle 200, notamment car son appareil de prise d'images est formé par une seule caméra 304, alors que l'appareil de prise d'images du dispositif de contrôle 200 comprend deux caméras 204. La caméra 304 a un dispositif de correction optique 304.5 et un dissipateur thermique 304.6 configuré pour refroidir la caméra 304 en service.

Par ailleurs, le dispositif de contrôle 300 diffère du dispositif de contrôle 200, notamment car chaque source d'éclairage 302.1 et 302.2 est composée de diodes électroluminescentes (LED) 302.5 agencées sous forme de matrice rectangulaire ; alors que le système d'éclairage 202 est formé par deux sources d'éclairage linéaires. Chaque source d'éclairage 302.1 et 302.2 comprend un dissipateur thermique respectif 302.6 et 302.7.

En outre, le dispositif de contrôle 300 diffère du dispositif de contrôle 200, notamment car le dispositif de contrôle 300 comprend en outre un miroir réfléchissant 308 agencé de façon à réfléchir la lumière provenant de chaque paquet de boîtes pliables vers la caméra 304. Un tel miroir réfléchissant 308 permet de former un dispositif de contrôle 300 compact. Chaque source d'éclairage 302.1 et 302.2 éclaire directement chaque paquet de boîtes pliables à travers une fenêtre 309 ménagée dans le bâti 303.

En service, le dispositif de contrôle 300 peut être commandé suivant le procédé de contrôle 2000 illustré à la figure 15.

## Revendications

1. Dispositif de contrôle (200 ; 300), pour contrôler la qualité de boîtes pliables (1), chaque boîte pliable (1) comprenant, lorsque la boîte pliable (1) est à l'état plié, au moins deux rabats (6) séparés par une fente (210), la fente (210) présentant une extrémité périphérique (214) qui débouche sur une face périphérique (212) de la boîte pliable (1) et qui délimite un intervalle latéral (216) entre les deux rabats (6),
le dispositif de contrôle (200 ; 300) comprenant :
- un système d'éclairage (202 ; 302) destiné à éclairer les boîtes pliables (1) à l'état plié, est configuré pour éclairer un paquet (201) formé de boîtes pliables (1) superposées ou juxtaposées, ledit paquet (201) présentant au moins une face périphérique de paquet (212) définie par des faces périphériques de chaque boîte pliable (1) composant le paquet (201), et
- au moins un appareil de prise d'images (204 ; 304) destiné à former des images des boîtes pliables (1) à l'état plié,
le dispositif de contrôle (200 ; 300) étant **caractérisé en ce que** :
- le système d'éclairage (202 ; 302) comprend deux sources d'éclairage (202.1, 202.2 ; 302.1, 302.2) agencées de part et d'autre dudit au moins un appareil de prise d'images (204 ; 304), les sources d'éclairage (202.1, 202.2 ; 302.1, 302.2) étant configurées pour éclairer successivement une même face périphérique (212) de chaque boîte pliable (1) à l'état plié de sorte que ledit au moins un appareil de prise d'images (204 ; 304) forme successivement deux images différentes de la même face périphérique (212) de chaque boîte pliable (1) à l'état plié,
- ledit au moins un appareil de prise d'images (204 ; 304) est configuré pour former au moins une image plurale (205) représentant au moins une partie de la face périphérique de paquet (212) lorsque le système d'éclairage (202) éclaire la face périphérique de paquet (212),
et **en ce qu'**il comprend en outre au moins un système de traitement d'images (206 ; 306) configuré :
i) pour détecter chaque extrémité périphérique (214) dans l'image plurale (205),
ii) pour générer un ensemble de données représentatives de la géométrie de chaque extrémité périphérique (214), et
iii) pour analyser l'ensemble de données de façon à déterminer la largeur de chaque intervalle latéral (216).

2. Dispositif de contrôle (200 ; 300) selon la revendication 1, dans lequel le système de traitement d'images (206 ; 306) est en outre configuré :
xii) pour extraire des objets sombres (220) à partir de chaque image plurale (205),
vii) pour comparer la hauteur (H220) de chaque objet sombre (220) à l'épaisseur nominale d'une boîte pliable (1) à l'état plié, la hauteur (H220) étant mesurée perpendiculairement à la plus grande dimension de la boîte pliable (1) à l'état plié, et
viii) pour sélectionner chaque objet sombre (220) ayant une hauteur équivalente à l'épaisseur nominale d'une boîte pliable (1) à l'état plié sous une tolérance prédéterminée, chaque objet sombre (220) sélectionné correspondant à un intervalle latéral (16 ; 216).

3. Dispositif de contrôle (200 ; 300) selon la revendication 2, dans lequel le système de traitement d'images (206 ; 306) est en outre configuré :
xiii) pour détecter, dans chaque image plurale (205), les limites des boîtes pliables (1) formant les extrémités du paquet (201) perpendiculairement à la plus grande dimension d'une boîte pliable (1) à l'état plié, et
xiv) pour discriminer chaque boîte pliable (1) dans le paquet (201).

4. Dispositif de contrôle (200 ; 300) selon l'une quelconque des revendications précédentes, dans lequel le système de traitement d'images (206 ; 306) est en outre configuré :
iv) pour comparer la largeur de chaque intervalle latéral (216) à une limite inférieure prédéterminée et à une limite supérieure prédéterminée, et
iv) pour générer un signal d'anomalie lorsqu'une largeur d'un intervalle latéral (216) est soit inférieure à la limite inférieure prédéterminée soit supérieure à la limite supérieure prédéterminée.

5. Dispositif de contrôle (200) selon l'une quelconque des revendications précédentes, dans lequel ledit au moins un appareil de prise d'images (204) est une caméra matricielle.

6. Dispositif de contrôle (300) selon l'une quelconque des revendications 1 à 4, dans lequel ledit au moins un appareil de prise d'images (304) est une caméra linéaire configurée pour former une image d'une face périphérique (12) respective de chaque boîte pliable (1) pendant qu'un dispositif de transport (58) déplace chaque boîte pliable (1) par rapport à la caméra linéaire.

7. Dispositif de contrôle (200) selon la revendication 6 comprenant deux appareils de prise d'images (204) placés à deux altitudes différentes de façon à former des images plurales (205) respectivement d'une partie basse et d'une partie haute de la face périphérique de paquet (212).

8. Dispositif de contrôle (200 ; 300) selon l'une quelconque des revendications précédentes, dans lequel le système d'éclairage (202 ; 302) comprend au moins une source d'éclairage (202.1, 202.2 ; 302.1, 302.2) sélectionnée dans le groupe constitué d'un tube fluorescent, d'une lampe à décharge et de diodes électroluminescentes, par exemple une colonne de diodes électroluminescentes.

9. Dispositif de contrôle (200) selon la revendication 8, dans lequel le système d'éclairage (202) est configuré pour éclairer de manière pulsée une face périphérique (212) de chaque boîte pliable à l'état plié.

10. Installation de fabrication (50), pour fabriquer des boîtes pliables (1), chaque boîte pliable (1) comprenant, lorsque la boîte pliable (1) est à l'état plié, des panneaux (4) raccordés par des plis (8) et au moins deux rabats (6) séparés par une fente (10 ; 210), l'installation de fabrication (50) comprenant au moins :
- un dispositif de collage (52) configuré pour appliquer de la colle sur une zone de collage de chaque boîte pliable (1),
- un dispositif de pliage (54) configuré pour replier des panneaux (4) de façon à coller une zone à coller sur la zone de collage,
- un dispositif d'empilement (56) configuré pour empiler les boîtes pliables (1) à l'état plié,
- un dispositif de transport (58), configuré pour placer chaque boîte pliable (1) dans le dispositif de collage (52), puis dans le dispositif de pliage (54), puis dans le dispositif d'empilement (56), et
- au moins un dispositif de contrôle (200 ; 300) selon l'une quelconque des revendications précédentes, ledit au moins un dispositif de contrôle (200 ; 300) est disposé en aval du dispositif d'empilement (56).

11. Installation de fabrication (50) selon la revendication 10, comprenant deux dispositifs de contrôle (200), les dispositifs de contrôle (200) étant disposés de façon à former des images respectives (205) de deux faces périphériques de paquet (212).

12. Procédé de contrôle (2000), pour contrôler la qualité de boîtes pliables (1), chaque boîte pliable (1) comprenant, lorsque la boîte pliable (1) est à l'état plié, au moins deux rabats (6) séparés par une fente (10 ; 210), la fente (10 ; 210) présentant une extrémité périphérique (14 ; 214) qui débouche sur une face périphérique (12 ; 212) de la boîte pliable (1) et qui délimite un intervalle latéral (16 ; 216) entre les deux rabats (6), le procédé de contrôle (2000) comprenant les étapes :
- éclairer, par un système d'éclairage (202 ; 302), un paquet (201) formé de boîtes pliables (1) à l'état plié, et superposées ou juxtaposées, ledit paquet (201) présentant au moins une face périphérique de paquet (212) définie par des faces périphériques de chaque boîte pliable (1) composant le paquet (201), et
- former, par au moins un appareil de prise d'images (204 ; 304), des images des boîtes pliables (1) à l'état plié,
le procédé de contrôle (2000) étant **caractérisé en ce qu'**il comprend en outre les étapes :
- (2002) éclairer, par le système d'éclairage (202) comprenant deux sources d'éclairage (202.1, 202.2 ; 302.1, 302.2) agencées de part et d'autre dudit au moins un appareil de prise d'images (204 ; 304), les sources d'éclairage (202.1, 202.2 ; 302.1, 302.2) étant configurées pour éclairer successivement une même face périphérique (212) de chaque boîte pliable (1) à l'état plié de sorte que ledit au moins un appareil de prise d'images (204 ; 304) forme successivement deux images différentes de la même face périphérique (212) de chaque boîte pliable (1) à l'état plié,
- (2004) former, par ledit au moins un appareil de prise d'images (204 ; 304), au moins une image plurale (205) représentant au moins une partie de la face périphérique de paquet (212) lorsque le système d'éclairage (202 ; 302) éclaire la face périphérique de paquet (212),
- (2006) actionner au moins un système de traitement d'images (206 ; 306) de façon à :
(2008) i) détecter au moins une extrémité périphérique (214) dans l'image plurale (205),
(2010) ii) générer un ensemble de données représentatives de la géométrie de chaque extrémité périphérique (214), et
(2012) iii) analyser l'ensemble de données de façon à déterminer la largeur de chaque intervalle latéral (16 ; 216).

## Patentansprüche

1. Überprüfungsvorrichtung (200; 300), zum Überprüfen der Qualität von Faltschachteln (1), wobei jede Faltschachtel (1), wenn die Faltschachtel (1) im gefalteten Zustand ist, mindestens zwei Klappen (6) umfasst, die durch einen Schlitz (210) getrennt sind, wobei der Schlitz (210) ein peripheres Ende (214) aufweist, das in eine periphere Fläche (212) der Faltschachtel (1) mündet, und das ein Seitenintervall (216) zwischen den beiden Klappen (6) begrenzt, wobei die Überprüfungsvorrichtung (200; 300) Folgendes umfasst:
- ein Beleuchtungssystem (202; 302), das dazu bestimmt ist, die Faltschachteln (1) im gefalteten Zustand zu beleuchten, ist konfiguriert, um ein Paket (201) zu beleuchten, das aus übereinander- oder nebeneinandergestellten Faltschachteln (1) gebildet wird, wobei das Paket (201) mindestens eine periphere Paketfläche (212) aufweist, die durch die peripheren Flächen jeder Faltschachtel (1), aus denen sich das Paket (201) zusammensetzt, definiert wird, und
- mindestens eine Bildaufnahmeeinrichtung (204; 304), die dazu bestimmt ist, Bilder der Faltschachteln (1) im gefalteten Zustand zu bilden,
wobei die Überprüfungsvorrichtung (200; 300) **dadurch gekennzeichnet ist, dass**:
- das Beleuchtungssystem (202; 302) zwei Beleuchtungsquellen (202.1, 202.2; 302.1, 302.2) umfasst, die beiderseits der mindestens einen Bildaufnahmeeinrichtung (204; 304) angeordnet sind, wobei die Beleuchtungsquellen (202.1, 202.2; 302.1, 302.2) konfiguriert sind, um nacheinander eine selbe periphere Fläche (212) jeder Faltschachtel (1) im gefalteten Zustand zu beleuchten, sodass die mindestens eine Bildaufnahmeeinrichtung (204; 304) nacheinander zwei unterschiedliche Bilder derselben peripheren Fläche (212) jeder Faltschachtel (1) im gefalteten Zustand bildet,
- wobei die mindestens eine Bildaufnahmeeinrichtung (204; 304) konfiguriert ist, um mindestens ein pluralistisches Bild (205) zu bilden, das mindestens einen Teil der peripheren Paketfläche (212) darstellt, wenn das Beleuchtungssystem (202) die periphere Paketfläche (212) beleuchtet,
und dadurch, dass sie weiter mindestens ein Bildverarbeitungssystem (206; 306) umfasst, konfiguriert:
i) zum Detektieren jedes peripheren Endes (214) in dem pluralistischen Bild (205),
ii) zum Generieren einer Einheit von repräsentativen Daten für die Geometrie eines jeden peripheren Endes (214), und
iii) zum Analysieren der Einheit von Daten, um die Breite jedes Seitenintervalls (216) zu bestimmen.

2. Überprüfungsvorrichtung (200; 300) nach Anspruch 1, wobei das Bildverarbeitungssystem (206; 306) weiter konfiguriert ist:
xii) zum Extrahieren der dunklen Objekte (220) aus jedem pluralistischen Bild (205),
vii) zum Vergleichen der Höhe (H220) jedes dunklen Objekts (220) mit der nominalen Dicke einer Faltschachtel (1) im gefalteten Zustand, wobei die Höhe (H220) senkrecht zur größten Abmessung der Faltschachtel (1) im gefalteten Zustand gemessen wird, und
viii) zum Auswählen jedes dunklen Objekts (220), das eine Höhe aufweist, die gleichwertig einer nominalen Dicke einer Faltschachtel (1) im gefalteten Zustand unter einer vorbestimmten Toleranz ist, wobei jedes ausgewählte dunkle Objekt (220) einem Seitenintervall (16; 216) entspricht.

3. Überprüfungsvorrichtung (200; 300) nach Anspruch 2, wobei das Bildverarbeitungssystem (206; 306) weiter konfiguriert ist:
xiii) zum Detektieren, in jedem pluralistischen Bild (205), der Grenzen der Faltschachteln (1), die die Enden des Pakets (201) bilden, senkrecht zur größten Abmessung einer Faltschachtel (1) im gefalteten Zustand, und
xiv) zum Unterscheiden jeder Faltschachtel (1) in dem Paket (201).

4. Überprüfungsvorrichtung (200; 300) nach einem der vorstehenden Ansprüche, wobei das Bildverarbeitungssystem (206; 306) weiter konfiguriert ist:
iv) zum Vergleichen der Breite jedes Seitenintervalls (216) mit einer vorbestimmten unteren Grenze und einer vorbestimmten oberen Grenze, und
iv) zum Generieren eines Anomaliesignals, wenn eine Breite eines Seitenintervalls (216) entweder kleiner als die vorbestimmte untere Grenze oder größer als die vorbestimmte obere Grenze ist.

5. Überprüfungsvorrichtung (200) nach einem der vorstehenden Ansprüche, wobei die mindestens eine Bildaufnahmeeinrichtung (204) eine Matrixkamera ist.

6. Überprüfungsvorrichtung (300) nach einem der Ansprüche 1 bis 4, wobei die mindestens eine Bildaufnahmeeinrichtung (304) eine lineare Kamera ist, die konfiguriert ist, um ein Bild einer peripheren Fläche (12) jeweils jeder Faltschachtel zu bilden, während eine Transportvorrichtung (58) jede Faltschachtel (1) in Bezug auf die lineare Kamera verschiebt.

7. Überprüfungsvorrichtung (200) nach Anspruch 6, zwei Bildaufnahmeeinrichtungen (204) umfassend, die auf zwei unterschiedlichen Höhen platziert sind, um pluralistische Bilder (205) jeweils eines unteren Teils und eines oberen Teils der peripheren Paketfläche (212) zu bilden.

8. Überprüfungsvorrichtung (200; 300) nach einem der vorstehenden Ansprüche, wobei das Beleuchtungssystem (202; 302) mindestens eine Beleuchtungsquelle (202.1, 202.2; 302.1, 302.2) umfasst, die aus der Gruppe ausgewählt ist, die aus einer Leuchtröhre, einer Entladungslampe und elektrolumineszierenden Dioden, beispielsweise einer Säule von elektrolumineszierenden Dioden gebildet wird.

9. Überprüfungsvorrichtung (200) nach Anspruch 8, wobei das Beleuchtungssystem (202) konfiguriert ist, um in pulsierender Form eine periphere Fläche (212) jeder Faltschachtel im gefalteten Zustand zu beleuchten.

10. Produktionsanlage (50) zum Produzieren von Faltschachteln (1), wobei jede Faltschachtel (1), wenn die Faltschachtel (1) im gefalteten Zustand ist, Wandflächen (4), die durch Falten (8) verbunden sind, und mindestens zwei Klappen (6) umfasst, die durch einen Schlitz (10; 210) getrennt sind, wobei die Produktionsanlage (50) mindestens Folgendes umfasst:
- eine Klebevorrichtung (52), die konfiguriert ist, um Kleber auf eine Klebezone jeder Faltschachtel (1) aufzutragen,
- eine Faltvorrichtung (54), die konfiguriert ist, um die Wandflächen (4) zu falten, um eine zu verklebende Zone auf die Klebezone zu kleben,
- eine Stapelvorrichtung (56), die konfiguriert ist, um die Faltschachteln (1) im gefalteten Zustand zu stapeln,
- eine Transportvorrichtung (58), die konfiguriert ist, um jede Faltschachtel (1) in der Klebevorrichtung (52), danach in der Faltvorrichtung (54), danach in der Stapelvorrichtung (56) zu platzieren, und
- mindestens eine Überprüfungsvorrichtung (200; 300) nach einem der vorstehenden Ansprüche, wobei die mindestens eine Überprüfungsvorrichtung (200; 300) stromabwärts der Stapelvorrichtung (56) angeordnet ist.

11. Produktionsanlage (50) nach Anspruch 10, zwei Überprüfungsvorrichtungen (200) umfassend, wobei die Überprüfungsvorrichtungen (200) derart angeordnet sind, um jeweilige Bilder (205) zweier peripherer Paketflächen (212) zu bilden.

12. Überprüfungsverfahren (2000) zum Überprüfen der Qualität von Faltschachteln (1), wobei jede Faltschachtel (1), wenn die Faltschachtel (1) im gefalteten Zustand ist, mindestens zwei Klappen (6) umfasst, die durch einen Schlitz (10; 210) getrennt sind, wobei der Schlitz (10; 210) ein peripheres Ende (14; 214) aufweist, das in eine periphere Fläche (12; 212) der Faltschachtel (1) mündet, und das ein Seitenintervall (16; 216) zwischen den beiden Klappen (6) begrenzt, wobei das Überprüfungsverfahren (2000) die folgenden Schritte umfasst:
- Beleuchten, durch ein Beleuchtungssystem (202; 302), eines Pakets (201), das aus übereinander- oder nebeneinandergestellten Faltschachteln (1) im gefalteten Zustand gebildet wird, wobei das Paket (201) mindestens eine periphere Paketfläche (212) aufweist, die durch die peripheren Flächen jeder Faltschachtel (1), aus denen sich das Paket (201) zusammensetzt, definiert wird, und
- Bilden, durch mindestens eine Bildaufnahmeeinrichtung (204; 304), von Bildern der Faltschachteln (1) im gefalteten Zustand,
wobei das Überprüfungsverfahren (2000) **dadurch gekennzeichnet ist, dass** es weiter die folgenden Schritte umfasst:
- (2002) Beleuchten, durch das Beleuchtungssystem (202), das zwei Beleuchtungsquellen (202.1, 202.2; 302.1, 302.2) umfasst, die beiderseits der mindestens einen Bildaufnahmeeinrichtung (204; 304) angeordnet sind, wobei die Beleuchtungsquellen (202.1, 202.2; 302.1, 302.2) konfiguriert sind, um nacheinander eine selbe periphere Fläche (212) jeder Faltschachtel (1) im gefalteten Zustand zu beleuchten, sodass die mindestens eine Bildaufnahmeeinrichtung (204; 304) nacheinander zwei unterschiedliche Bilder derselben peripheren Fläche (212) jeder Faltschachtel (1) im gefalteten Zustand bildet,
- (2004) Bilden, durch die mindestens eine Bildaufnahmeeinrichtung (204; 304) mindestens eines pluralistischen Bildes (205), das mindestens einen Teil der peripheren Paketfläche (212) darstellt, wenn das Beleuchtungssystem (202; 302) die periphere Paketfläche (212) beleuchtet,
- (2006) Betätigen mindestens eines Bildverarbeitungssystems (206; 306), um:
(2008) i) mindestens ein peripheres Ende (214) in dem pluralistischen Bild (205) zu detektieren,
(2010) ii) eine Einheit von repräsentativen Daten für die Geometrie eines jeden peripheren Endes (214) zu generieren, und
(2012) iii) die Einheit von Daten zu analysieren, um die Breite jedes Seitenintervalls (16; 216) zu bestimmen.

## Claims

1. Checking device (200; 300), for checking the quality of folding boxes (1), each folding box (1) comprising, when the folding box (1) is in a folded state, at least two flaps (6) separated by a slot (210), the slot (210) having a peripheral end (214) which leads to a peripheral face (212) of the folding box (1) and which delimits a lateral interval (216) between the two flaps (6),
the checking device (200; 300) comprising:
- an illumination system (202; 302) configured to illuminate the folding boxes (1) in the folded state, and which is configured to illuminate a pack (201) formed of superposed or juxtaposed folding boxes (1), said pack (201) having at least one peripheral pack face (212) defined by peripheral faces of each folding box (1) composing the pack (201), and
- at least one camera device (204; 304) configured to form images of the folding boxes (1) in the folded state,
the checking device (200; 300) being **characterised in that**:
- the illumination system (202; 302) comprises two illumination sources (202.1; 202.2; 302.1; 302.2) arranged on either side of said at least one camera device (204; 304), the illumination sources (202.1, 202.2; 302.1, 302.2) being configured to successively illuminate one same peripheral face (212) of each folding box (1) in the folded state such that said at least one camera device (204; 304) successively forms two different images of the same peripheral face (212) of each folding box (1) in the folded state,
- said at least one camera device (204; 304) is configured to form at least one plural image (205) representing at least one portion of the peripheral pack face (212) when the illumination system (202) illuminates the peripheral pack face (212),
and **in that** it further comprises at least one image processing system (206; 306) configured:
i) to detect each peripheral end (214) in the plural image (205),
ii) to generate a set of data representative of the geometry of each peripheral end (214), and
iii) to analyse the set of data so as to determine the width of each lateral interval (216).

2. Checking device (200; 300) according to claim 1, wherein the image processing system (206; 306) is further configured:
xii) to extract dark objects (220) from each plural image (205),
vii) to compare the height (H220) of each dark object (220) with the nominal thickness of a folding box (1) in the folded state, the height (H220) being measured perpendicularly to the largest dimension of the folding box (1) in the folded state, and
viii) to select each dark object (220) having a height equivalent to the nominal thickness of a folding box (1) in the folded state under a predetermined tolerance, each dark object (220) selected corresponding to a lateral interval (16; 216).

3. Checking device (200; 300) according to claim 2, wherein the image processing system (206; 306) is further configured:
xiii) to detect, in each plural image (205), the limits of the folding boxes (1) forming the ends of the pack (201) perpendicularly to the largest dimension of a folding box (1) in the folded state, and
xiv) to distinguish each folding box (1) in the pack (201).

4. Checking device (200; 300) according to any one of the preceding claims, wherein the image processing system (206; 306) is further configured:
iv) to compare the width of each lateral interval (216) with a predetermined lower limit with a predetermined upper limit, and
iv) to generate an anomaly signal when a width of a lateral interval (216) is either less than the predetermined lower limit or greater than the predetermined upper limit.

5. Checking device (200) according to any one of the preceding claims, wherein said at least one camera device (204) is a matrix camera.

6. Checking device (300) according to any one of claims 1 to 4, wherein said at least one camera device (304) is a linear camera configured to form an image of a respective peripheral face (12) of each folding box (1) while a transport device (58) moves each folding box (1) with respect to the linear camera.

7. Checking device (200) according to claim 6, comprising two camera devices (204) placed at two different altitudes so as to form plural images (205) respectively of a low portion and a high portion of the peripheral pack face (212).

8. Checking device (200; 300) according to any one of the preceding claims, wherein the illumination system (202; 302) comprises at least one illumination source (202.1, 202.2; 302.1; 302.2) selected in the group formed of a fluorescent tube, a discharge lamp and light-emitting diodes, for example a column of light-emitting diodes.

9. Checking device (200) according to claim 8, wherein the illumination system (202) is configured to illuminate in a pulsed manner, a peripheral face (212) of each folding box in the folded state.

10. Manufacturing installation (50), to manufacture folding boxes (1), each folding box (1) comprising, when the folding box (1) is in the folded state, panels (4) connected by folds (8) and at least two flaps (6) separated by a slot (10; 210), the manufacturing installation (50) comprising at least:
- one gluing device (52) configured to apply glue on a gluing zone of each folding box (1),
- a folding device (54) configured to fold panels (4) so as to glue a zone to be glued onto the gluing zone,
- a stacking device (56) configured to stack the folding boxes (1) in the folded state,
- a transport device (58), configured to place each folding box (1) in the gluing device (52), then in the folding device (54), then in the stacking device (56), and
- at least one checking device (200; 300) according to any one of the preceding claims, said at least one checking device (200; 300) is disposed downstream from the stacking device (56).

11. Manufacturing installation (50) according to claim 10, comprising two checking devices (200), the checking devices (200) being disposed so as to form respective images (205) of two peripheral pack faces (212).

12. Checking method (2000), to control the quality of folding boxes (1), each folding box (1) comprising, when the folding box (1) is in the folded state, at least two flaps (6) separated by a slot (10; 210), the slot (10; 210) having a peripheral end (14; 214) which leads to a peripheral face (12; 212) of the folding box (1) and which delimits a lateral interval (16; 216) between the two flaps (6), the checking method (2000) comprising the steps of:
- illuminating, by an illumination system (202; 302), a pack (201) formed of folding boxes (1) in the folded state, and superposed or juxtaposed, said pack (201) having at least one peripheral packt face (212) defined by peripheral faces of each folding box (1) composing the pack (201), and
- forming, by at least one camera device (204; 304), images of folding boxes (1) in the folded state,
the checking method (2000) being **characterised in that** it further comprises the steps of:
- (2002) illuminating, by an illumination system (202) comprising two illumination sources (202.1, 202.2; 302.1; 302.2) arranged on either side of said at least one camera device (204; 304), the illumination sources (202.1, 202.2; 302.1, 302.2) being configured to successively illuminate one same peripheral face (212) of each folding box (1) in the folded state such that said at least one camera device (204; 304) successively forms two different images of the same peripheral face (212) of each folding box (1) in the folded state,
- (2004) forming by said at least one camera device (204; 304), at least one plural image (205) representing at least one portion of the peripheral pack face (212) when the illumination system (202; 302) illuminates the peripheral pack face (212),
- (2006) actuating at least one image processing system (206; 306) so as to:
(2008) i) detect at least one peripheral end (214) in the plural image (205),
(2010) ii) generate a set of data representative of the geometry of each peripheral end (214), and
(2012) iii) analyse the set of data so as to determine the width of each lateral interval (16; 216).
